Europäisches Patentamt

European Patent Office

Office européen des brevets

(19)

(11) Veröffentlichungsnummer: **0 379 858**
**A2**

(12) **EUROPÄISCHE PATENTANMELDUNG**

(21) Anmeldenummer: 90100070.3

(22) Anmeldetag: 03.01.90

(51) Int. Cl.⁵: **D21C 9/10**

(30) Priorität: 27.01.89 DE 3902423

(43) Veröffentlichungstag der Anmeldung:
01.08.90 Patentblatt 90/31

(84) Benannte Vertragsstaaten:
AT BE CH DE DK ES FR GB IT LI NL SE

(71) Anmelder: **Degussa Aktiengesellschaft**
**Weissfrauenstrasse 9**
**D-6000 Frankfurt am Main 1(DE)**

(72) Erfinder: **Eul, Wilfried, Dr.**
**85 Abbey Ct.**
**Ramsey N.J. 07446(US)**
Erfinder: **Süss, Hans Ulrich, Dr.**
**Schulstrasse 24**
**D-6467 Gondsroth(DE)**

(54) **Verfahren zur Bleiche von Faserstoffen zur Papierherstellung.**

(57) Die Erfindung betrifft ein Verfahren zur Bleiche von Faserstoffen zur Papierherstellung bei erhöhter Temperatur und einer Stoffdichte > 20 Gew.-% während einer intensiven mechanischen Behandlung des Faserstoffs, welches dadurch gekennzeichnet ist, daß man die Bleiche unter Verwendung von 0,05 bis 2,5 Gew.-% Formamidinsulfinsäure, bezogen auf atro Faserstoff, durchführt.

EP 0 379 858 A2

## Verfahren zur Bleiche von Faserstoffen zur Papierherstellung

Die Erfindung betrifft ein Verfahren zur Bleiche von Faserstoffen zur Papierherstellung bei erhöhter Temperatur und einer Stoffdichte von mehr als 20 % während einer intensiven mechanischen oder thermo-mechanischen Behandlung dieses Faserstoffs.

Die Erfindung bezieht sich insbesondere auf die zur Papierherstellung üblicherweise verwendeten Rohstoffe aus Altpapier, für das bereits zahlreiche Bleichverfahren und physikalisch-mechanische Reinigungsverfahren bekannt sind:

(1) Helmling O., Süss U., Berndt W.:
Wochenblatt für Papierfabrikation 113 (1985), 657-661.

(2) Melzer J., Tibbling P., Jokio P.:
Wochenblatt für Papierfabrikation 113 (1985) 684-688.

Z.B. gibt es die Druckfarbenseparation, bei der durch Flotation oder Wäsche die Druckfarben von der Faserstoffsuspension abgetrennt werden.

Als Bleichmittel verwendet man häufig Wasserstoffperoxid, Natriumdithionit oder Formamidinsulfinsäure.

Für die Durchführung dieser Verfahren ist jeweils ein eigenes Mischaggregat, meist mit zusätzlicher Heizung und einem eigenen Bleichbehälter (z.B. Bleichturm) vorgesehen. Außerdem sind bestimmte Stoffdichten für jede Bleichchemikalie zur optimalen Wirksamkeit einzustellen. Dies betrifft insbesondere die Bleiche mit reduzierenden Bleichchemikalien wie Natriumdithionit, wo man bei niedrigen Stoffdichten arbeiten muß, um den Luftsauerstoff weitgehend auszuschließen. Bei Stoffdichten von mehr als 15 % ist eine aufwendige Technik, wie Arbeiten im Vakuum oder unter Schutzgasatmosphäre (DE-OS 3610940A1, US-PS 2,963,395) als notwendig beschrieben worden.

In der EP-B-0120 132 wird ein Verfahren zum Bleichen von Papierrohstoffen mit Formamidinsulfinsäure beschrieben, das jedoch bei max. 20 % Stoffdichte durchgeführt werden kann.

Nun gibt es bei der Altpapieraufbereitung bei Stoffdichten > 20 Gew.-% arbeitende Aggregate, die als Disperger, Refiner, Kneter, Einwellenzerfaserer, Frotapulper [R] etc. bezeichnet werden, in denen der Stoff unter Einwirkung starker Reibungskräfte homogenisiert, verfeinert oder mechanisch aktiviert wird.

Durch diese Behandlung werden Verunreinigungen wie Druckfarben, Stickies oder Holzsplitter unter die Sichtbarkeitsgrenze zerkleinert.

In diesen Fällen führt die Zerkleinerung der Inhomogenitäten sowie die stärkere Defibrillierung der Fasern durch den Mahleffekt zu einem Weißeverlust. Zudem kann der Stoff unerwünschte Farbnuancen enthalten, sowie generell ein zu niedriges Weißeniveau besitzen.

Es stellt sich die Frage, ob diese Apparaturen, die der intensiven mechanischen Behandlung des Faserstoffs dienen, auch für Bleichvorgänge genutzt werden können.

Aus der DE-OS 3610940 ist nun ein Verfahren bekannt, bei dem man einen auf mehr als 20 Gew.-% eingedickten Faserstoff in einem solchen Aggregat, in diesem Fall in einem schnellaufenden Kurzzeit-Intensivmischer, mit Wasserstoffperoxid oder Dithionit behandelt und somit zusätzliche Apparaturen zur Bleiche einspart.

In der Praxis erweist es sich jedoch, daß das so beschriebene Verfahren auch bei Verwendung von Bleichstabilisatoren oder Komplexierungsmitteln nicht zu der erwünschten Verbesserung der Weißegehalte führt.

Es besteht demnach weiter der Wunsch, in der Altpapieraufbereitung notwendige und schon vorhandene Apparaturen für die Bleiche dieser Faserstoffe nutzen zu können.

Gegenstand der Erfindung ist ein Verfahren zum Bleichen von Faserstoffen zur Papierherstellung bei erhöhter Temperatur und einer Stoffdichte von mehr als 20 Gew.-%, während einer intensiven mechanischen Behandlung des Faserstoffs, dadurch gekennzeichnet, daß man die Bleiche unter Verwendung von Formamidinsulfinsäure durchführt, im allgemeinen von 0,05 bis 2,5 Gew.-%, insbesondere 0,2 bis 1,2 Gew.-%, bezogen auf atro Faserstoff.

Man bleicht bei einem anfänglichen pH-Wert von 9 bis 10, der im Verlauf der Reaktion auf 6 bis 8 abfällt.

Bleichstabilisatoren oder Komplexierungsmittel werden nicht benötigt.

Das erfindungsgemäße Verfahren wird in im Aufbereitungsprozeß des Faserstoffs bereits vorhandenen Apparaturen, in denen eine starke mechanische oder thermo-mechanische Belastung erfolgt, durchgeführt, ohne daß an dieser Behandlung etwas geändert wird.

Beispiele für Maschinen dieser Art sind z.B. Disperger, Refiner, Kneter, Frotapulper [R] oder ähnliche Vorrichtungen, die der Dispergierung und Homogenisierung des zu verarbeitenden Stoffs dienen, nachdem er vorher auf mehr als 20 Gew.-% und bis zu 38 Gew.-%, bevorzugt 25 bis 30 Gew.-%, verdichtet wurde.

Durch die starken Reibungskräfte in diesen Aggregaten kommt es zu einer Temperaturerhöhung von ca. 10 bis 20 °C. Der Stoff kann aber auch vorher z.B. in Heizschnecken aufgeheizt werden, so daß die Homogenisierung des Stoffs bei Temperaturen zwischen 80 und 99 °C (drucklos ) oder über 100 °C (unter Druck) stattfindet.

Bei dem mechanischen Nachbehandlungsschritt können für kurze Zeit hohe Temperaturen von bis zu 120 °C auftreten.

Das Bleichverfahren läuft problemlos im Temperaturbereich von 50 bis 120 °C ab.

Das Bleichmittel kann als Pulver, Slurry oder Suspension in Wasser, getrennt oder gemeinsam mit der alkalisch wirkenden Verbindung, wie z. B. Natriumhydroxid, je nach Gegebenheit vor dem Dispergierschritt zugegeben und bei der mechanischen Behandlung der Fasern optimal gemischt werden, um dann direkt auf die neuentstehenden Faseroberflächen einwirken zu können. Die Bleichmittelzugabe ist auch nach dem Dispergierschritt möglich, wenn eine ausreichende Einmischung des Bleichmittels durch Pumpen, Rührer oder spezielle Mischaggregate gewährleistet ist.

Bei Temperaturen von mehr als 90 °C während des Dispergierschrittes beträgt die Reaktionsdauer ca. 1 bis 5 min, so daß die Beendigung der Bleichreaktion in den den als Intensivmischern wirkenden Aggregaten nachgeschalteten Auffangbehältern (wie Rohrleitungen, Bütten oder Stapeltürme) erfolgt.

Durch die extreme Mischwirkung der Aggregate, die Reibungswäre bei rein mechanischer Stoffbehandlung und das hohe Temperaturniveau in der thermo-mechanischen Stoffbehandlung ist die Bleiche aufgrund der immanenten hohen Reaktivität des FAS meist schon zu über 90 % nach Verlassen des Mischaggregates beendet.

Im Gegensatz zur Verwendung z. B. von Wasserstoffperoxid ist es möglich, unmittelbar nach dem Durchlaufen eines der oben näher bezeichneten Aggregate bei Verwendung von Formamidinsulfinsäure als Bleichmittel die Stoffdichte ohne Verlust an Weißegehalt abzusenken, wenn der allgemeine Verfahrensablauf dies erforderlich macht.

Die optimalen Bleichparameter sind für jeden Einzelfall nach diesen Angaben auszuwählen.

Bevorzugt wird nach diesem Verfahren ein Altpapierstoff gebleicht, der nach vorausgegangener mechanischer Reinigung, die einen Druckfarbenseparationsschritt, wie z. B. eine Flotation einschließen kann auf ca. 25 bis 30 Gew.-%, bezogen auf die Gesamtmenge, eingedickt wurde.

Wird das als Rohstoff eingesetzte Altpapier mehrfach flotiert, und sind zwischen diesen Verfahrensstufen Disperger oder ähnlich wirkende, bei den hohen Stoffdichten arbeitende Apparaturen vorhanden, bleicht man vorteilhaft nach dem neuen Verfahren alternativ auch dort.

Das erfindungsgemäße Verfahren führt überraschenderweise, trotz der hohen Stoffdichten zu einem deutlichen Weißgehaltanstieg, obwohl man im Hinblick auf die hohe Empfindlichkeit gegen den Oxidationsangriff durch den vorhandenen Luftsauerstoff einen geringeren Anstieg als bei der Verwendung des weniger reaktiven Dithionits (DE-OS 3610940) erwartet hätte.

Beispiele

Beispiel 1

Vergleich der Bleichwirkung von Natriumdithionit und Formamidinsulfinsäure

Ein in einem konventionellen Flotations-Deinking-Prozeß erzeugter, farbnuancenfreier Altpapierstoff aus 50 % Zeitungen und 50 % Illustrierten wird bei einer Stoffdichte von 20 % und einem pH-Wert von 6.6 mehrfach evakuiert und danach wieder mit Stickstoffgas belüftet, um sämtlichen Luftsauerstoff zu vertreiben, anschließend unter Stickstoffatmosphäre durch Mikrowellen einer Kurzzeiterhitzung auf 70 °C unterzogen, in einem Laborkneter bei 95 °C unter Stickstoffgasatmosphäre mit einer frisch hergestellten komplexbildnerhaltigen ($Na_5$DTPA) Natriumdithionitlösung versetzt, so daß die eingesetzte Natriumdithionitmenge, bezogen auf Stoff 1,0 % (Handelsware), die Komplexbildnermenge 0,2 % ($Na_5$DTPA Handelsware 40 %), bezogenauf Stoff, betrug.

In gleicher Weise wurde anstelle der Natriumdithionitlösung eine frisch bereitete, alkalisch aktivierte FAS-Lösung ohne Komplexbildnerzusatz verwendet bei einer Einsatzmenge von 0,5 % FAS + 0,2 % NaOH (100 %ig), bezogen auf Stoff.

Jeweils nach 1, 5, 10 und 20 min. Knetzeit wurden Proben entnommen und Laborblätter gebildet. Die Weißgrade sind in Tabelle 1 zusammengefaßt.

Tabelle 1:

| Weißgradentwicklung bei iner Hochtemperatur-Hochkonsistenzbleiche von Deinktstoff mit Natriumdithionit bzw. FAS | | |
|---|---|---|
| Kneter-Zeit (Min) | Weißgrad ISO $R_{457}$(%) | |
| | mit 1 % Na-Dithionit | mit 0,5 % FAS |
| 0 (ungebleicht) | 61,0 | 61,0 |
| 1 | 62,3 | 63,4 |
| 2 | 63,1 | 64,2 |
| 5 | 63,8 | 65,4 |
| 10 | 62,9 | 66,3 |
| 20 | 62,4 | 66,8 |

Die Ergebnisse zeigen, daß die Bleichwirkung des Na-Dithionits der des FAS eindeutig unterlegen ist.

Beispiel 2 a:

Vergleich der Bleichwirksamkeit von Wasserstoffperoxid und Formamidinsulfinsäure in einer Heißdispergerbleiche

In einer 180 tato Deinking-Anlage wird der deinkte, ungefärbte und hocheingedickte, holzhaltige Altpapierstoff nach der Heizschnecke einer Heißdispergeranlage mit Wasserstoffperoxidbleichlösungen versetzt. Nach dem Disperger wird der Stoff sofort verdünnt und nach Passieren einer Zwischenbütte der weiteren Verarbeitung zugeführt. Die Weißesteigerung durch Zugabe des Bleichmittels ergibt sich aus der Differenz der Weiße des Stoffs vor dem Eintritt in die Heizschnecke und unmittelbar beim Verlassen der Dispergierscheibe vor Eintritt in die Zwischenbütte.

Die Bleichzeit entspricht damit gerade der Durchgangszeit durch das Dispergieraggregat. Anstelle der $H_2O_2$-Bleichlösung wurde dann eine alkalisch aktivierte FAS-Bleichlösung an der gleichen Stelle zudosiert (Versuche 4 und 5). Die Weißesteigerungen sind der Tabelle 2a zu entnehmen (Stoffdichte im Heißdisper-ger 25 Gew.-%).

4

Tabelle 2a:

| Weißesteigerung bei einer Heißdispergerbleiche mit Wasserstoffperoxid oder FAS | | | | |
|---|---|---|---|---|
| Bleichlösung | | Weißgrad ISO $R_{457}$ (%) | | |
| | | vor Disperger | nach Disperger | Weißgehalt |
| 1) | 0,7 % $H_2O_2$<br>0,1 % NaOH<br>0,2 % Stabilisator | 52,5 | 53,6 | + 1,1 |
| 2) | 0,8 % $H_2O_2$<br>0,3 % NaOH<br>ohne Stabilisator | 51,6 | 53,3 | + 1,7 |
| 3) | 0,7 % $H_2O_2$<br>0,3 % NaOH<br>0,2 % Stabilisator | 54,1 | 55,0 | + 0,9 |
| 4) | 0,5 % FAS<br>0,2 % NaOH | 52,6 | 57,7 | + 5,1 |
| 5) | 0,5 % FAS<br>0,3 % NaOH | 50,7 | 55,5 | + 4,8 |

Dieses Beispiel zeigt, daß die Bleiche mit Wasserstoffperoxid nur eine geringe Wirksamkeit hat, wenn der Stoff nach dem Passieren der Heißdispergeranlage direkt auf niedrige Stoffdichten verdünnt wird.

Beispiel 2 b:

Heißdispergerbleiche mit Wasserstoffperoxid bzw. FAS bei holzfreiem Deinktstoff

In diesem Versuch wird in gleicher Weise wie bei Versuch 2 a gearbeitet, jedoch mit weitgehend holzfreiem, ungefärbtem Deinktstoff. Dabei ergeben sich in den drei Versuchen mit Wasserstoffperoxidbleichlösungen bei einer Dosiermenge von 0,8 % - 1,0 % Wasserstoffperoxid (100) Weißeveränderungen von + 0,3, + 3,0 und - 0,3 Punkten. Dagegen führt die Heißdispergerbleiche mit FAS in vier Versuchen zu Weißesteigerungen von 3 bis 4 Punkten, wobei die Endweißen der gebleichten Stoffe auf einem Niveau von 73 - 75 % Weiße liegen.

Beispiel 2 c:

Heißdispergerbleiche von holzfreiem, massegefärbtem Deinktstoff mit Wasserstoffperoxid bzw. FAS

In der gleichen Deinking-Anlage werden, wie in Beispiel 2 a beschrieben, ein holzfreier Deinktstoff gebleicht, der jedoch in diesem Fall eine gelbe Massefarbe enthält. Der Ausgangsweißgrad liegt daher nur bei 62 bis 63 % ISO. Mit 0,5 % bis 1,0 % Wasserstoffperoxid war praktisch keine Weißesteigerung feststellbar. Unter Zusatz von 0,3 % bis 0,5 % alkalisch aktivierter FAS-Lösung steigt der Weißgrad von 62 bis 63 % ISO auf 83 bis 86 % ISO ($\Delta$ Weißgehalt = + 20 bis + 23 Punkte), wobei die gelbe Farbe beim Austritt des Stoffs aus der Dispergerscheibe ausgebleicht ist.

Beispiel 3:

FAS-Bleiche in einem Aggregat zur thermo-mechanischen Behandlung von Deinktstoff

In einer 60 tato Deinking-Anlage mit einem Aggregat zur thermo-mechanischen Nachbehandlung von Deinktstoff von einem anderen Hersteller als in Beispiel 2 werden bei schwach holzhaltigem Deinktstoff mit 0,4 % FAS der Weißgrad von 64 % auf über 72 % ISO ($R_{457}$), von holzfreiem Altpapierstoff von 84 % Weiße auf über 90 % Weiße angehoben. Die Bleiche ist unmittelbar beim Austritt des Stoffs aus der Anlage beendet, da dieser Stoff anschließend bei 30 % Stoffdichte in erhitztem Zustand über ein offenes Förderband in einen Stapelturm transportiert wird. Unter diesen Bedingungen ist eine weitere Bleichwirkung des reduzierenden Bleichmittels wegen der Zersetzung durch Luftsauerstoff praktisch auszuschließen. Die effektive Bleichzeit einer Behandlungstemperatur von etwa 98 °C liegt somit bei weniger als 0,5 Minuten.

**Ansprüche**

1. Verfahren zur Bleiche von Faserstoffen zur Papierherstellung bei erhöhter Temperatur und einer Stoffdichte > 20 Gew.-% während einer intensiven mechanischen Behandlung des Faserstoffs, dadurch gekennzeichnet, daß man die Bleiche unter Verwendung von 0,05 bis 2,5 Gew.-% Formamidinsulfinsäure, bezogen auf atro Faserstoff, durchführt.

2. Verfahren gemäß Anspruch 1, dadurch gekennzeichnet, daß man des Faserstoff vor der mechanischen Behandlung aufheizt (thermo-mechanische Behandlung).

3. Verfahren gemäß den Ansprüchen 1 oder 2, dadurch gekennzeichnet, daß man Faserstoff aus Altpapier einsetzt.

4. Verfahren gemäß Anspruch 3, dadurch gekennzeichnet, daß man einen vollständig oder teilweise deinkten Faserstoff einsetzt.

5. Verfahren gemäß einem oder mehreren der Ansprüche 1 bis 4, dadurch gekennzeichnet, daß man die gegebenenfalls notwendige Restreaktion in den dem mechanischen Behandlungsaggregat nachgeschalteten Stoffauffangbehältern ablaufen läßt.